# EUROPÄISCHE PATENTANMELDUNG

(11) **EP 1 669 732 A1**
(43) Veröffentlichungstag der Anmeldung: **14.06.2006**
(21) Anmeldenummer: 05110835.5
(22) Anmeldetag: 16.11.2005
(51) Int. Cl.: G01K 7/14

(54) **Temperatur-messsystem und Temperaturmessverfahren**

(30) Priorität: 07.12.2004 DE 102004058931
(71) Anmelder: Isabellenhütte Heusler GmbH & Co.KG, 35683 Dillenburg (DE)
(72) Erfinder: HARTMANN, Jens, 35713, Eschenburg-Wissenbach (DE); HETZLER, Ulrich, 35688, Dillenburg-Oberscheid (DE)
(74) Vertreter: Beier, Ralph

(57) **Zusammenfassung**

Die Erfindung betrifft ein Temperatur-Messsystem (1) mit einem Temperatursensor (2), der in Abhängigkeit von einer zu messenden Temperatur entsprechend einer sensorspezifischen Messkennlinie ein Temperaturmesssignal erzeugt sowie mit einem Korrekturglied (4), das dem Temperatursensor (2) nachgeschaltet ist und aus dem Temperaturmesssignal entsprechend einer Korrekturkennlinie ein korrigiertes Temperaturmesssignal bestimmt, das in einem Toleranzfeld einer vorgegebenen Normkennlinie liegt.

## Beschreibung

Die Erfindung betrifft ein Temperatur-Messsystem und ein zugehöriges Temperaturmessverfahren gemäß dem Oberbegriff der nebengeordneten Ansprüche.

Es ist bekannt, zur Temperaturmessung Thermoelemente einzusetzen, die in Abhängigkeit von der zu messenden Temperatur eine elektrische Thermospannung erzeugen, was auf dem sogenannten Seebeck-Effekt beruht. Derartige Thermoelemente bestehen aus zwei Leitern mit unterschiedlicher chemischer Zusammensetzung, die zu einem Stromkreis verbunden sind. Falls die beiden Verbindungsstellen der beiden Leiter auf unterschiedlichen Temperaturniveaus liegen, entsteht eine thermoelektrische Spannung, die ein direktes Maß für die Temperaturdifferenz zwischen den beiden Verbindungsstellen ist. Derartige Thermoelemente für die Temperaturmessung sind beispielsweise in der technischen Norm IEC 60584 genormt, wobei diese Norm die Temperaturabhängigkeit der Thermospannung in Form einer Kennlinie angibt und ein zulässiges Toleranzfeld von ±2,5 K oder ±0,75 % definiert. Die Norm IEC 60584 ist jedoch lediglich ein Beispiel von vielen technischen Normen in diesem Bereich.

Nachteilig an den vorstehend beschriebenen bekannten Thermoelementen zur Temperaturmessung ist die Tatsache, dass ein großer Herstellungsaufwand erforderlich ist, damit die Temperaturabhängigkeit der Thermospannung möglichst exakt den vorgegebenen technischen Normen entsprechen.

Weiterhin ist aus US2004/0102914A1 ein Temperatur-Messsystem bekannt, bei dem eine zeitliche Veränderung ("Drift") des Messverhaltens kompensiert wird, um eine möglichst genaue Messung zu erreichen. Eine Anpassung des Messverhaltens an eine vorgegebene Normkennlinie ist aus dieser Druckschrift jedoch nicht bekannt.

Ferner ist aus DE 30 30 990 Al eine herkömmliche Linearisierungsschaltung bekannt, die zur Linearisierung des Ausgangssignals eines Thermoelements eingesetzt werden kann. Diese Linearisierungsschaltung ermöglicht jedoch nur eine Linearisierung des Messverhaltens. Eine Anpassung an eine vorgegebene, unter Umständen auch nicht-lineare Normkennlinie ist damit jedoch nicht möglich.

Weiterhin ist aus DE 44 12 973 C2 ein Temperatur-Messverfahren bekannt, das zur Messung der Vorlauftemperatur und der Rücklauftemperatur in einer Warmwasserversorgung eines Gebäudes dient. Hierbei wird die Temperatur durch Temperatursensoren entsprechend einer sensorspezifischen Messkennlinie gemessen, wobei zur Erhöhung der Messgenauigkeit eine Kennlinienkorrektur erfolgt. Eine Anpassung an eine vorgegebene Normkennlinie ist hierbei jedoch nicht vorgesehen, sondern lediglich eine Verbesserung der Messgenauigkeit.

Aus DE 37 51 708 T2 ist ferner ein elektronisches Thermometer bekannt, das bei einer Temperaturmessung den stationären Endwert vorausberechnet, was eine schnellere Messung ermöglicht.

Der Erfindung liegt deshalb die Aufgabe zugrunde, bei einem Temperatur-Messsystem mit einem Thermoelement den Herstellungsaufwand zu verringern, der zur Einhaltung der vorgegebenen technischen Normen erforderlich ist. Darüber hinaus liegt der Erfindung die Aufgabe zugrunde, die Messgenauigkeit zu erhöhen, die mit einem vorgegebenen Herstellungsaufwand realisierbar ist. Weiterhin liegt der Erfindung die Aufgabe zugrunde, ein entsprechendes Temperaturmessverfahren anzugeben.

Diese Aufgabe wird durch ein Temperatur-Messsystem bzw. ein Temperaturmessverfahren gemäß dem Oberbegriff der nebengeordneten Ansprüche gelöst.

Die Erfindung umfasst die allgemeine technische Lehre, die Einhaltung der technischen Normen nicht durch eine möglichst exakte und damit aufwändige Herstellung des Thermoelements mit einer definierten Temperaturabhängigkeit der erzeugten Thermospannung zu erreichen, sondern durch ein nachgeschaltetes Korrekturglied, das die von dem Thermoelement erzeugte Thermospannung entsprechend einer sensorspezifischen Korrekturkennlinie so korrigiert, dass die vorgegebenen technischen Normen bezüglich der frei wählbaren normierten Thermoelementtypen eingehalten werden bzw. verbleibende Abweichungen nochmals reduziert werden.

Dies ermöglicht vorteilhaft eine kostengünstige Herstellung des Thermoelements als analogem Signalgeber, bestehend aus nahezu allen beliebigen Materialien, die nur noch die metallurgischen und mechanischen Forderungen, wie thermoelektrische Zeitstabilität, Homogenität, Oxidationsbeständigkeit, erfüllen müssen, nicht jedoch thermo-elektrischen Normen entsprechen müssen, da die Sensorstreuungen der Temperaturabhängigkeit sensorspezifisch durch das nachgeschaltete Korrekturglied entsprechend der Korrekturkennlinie ausgeglichen werden.

Die Erfindung zielt jedoch nicht nur auf die Verringerung der Herstellungskosten ab, indem aufgrund der Kennlinienkorrektur kostengünstige Materialien verwendet werden können. Vielmehr ermöglicht die Erfindung auch eine Verbesserung der Messgenauigkeit bei einem Einsatz von hochwertigen Materialien. Vorzugsweise weist das korrigierte Temperatur-Messsignal deshalb eine relativ kleine Streuung auf, die wesentlich kleiner ist als das zulässige Toleranzfeld der Normkennlinie, so dass die vorgegebene Norm hinsichtlich ihrer Genauigkeitsanforderungen weit übertroffen wird. Beispielsweise kann die Streuung des korrigierten Temperatur-Messsignals bei dem erfindungsgemäßem Temperatur-Messsystem kleiner als 75%, 50%, 25%, 10% oder sogar kleiner als 5% des Toleranzfeldes der Normkennlinie sein. Die Erfindung ist also nicht auf die Verwendung nicht-genormter Thermomaterialien beschränkt. Vielmehr können im Rahmen der Erfindung auch genormte Thermomaterialien eingesetzt werden, wobei die Erfindung dann eine Verbesserung der Messgenauigkeit über die Normanforderungen ermöglicht.

Das erfindungsgemäße Temperatur-Messsystem bildet hierbei vorzugsweise eine untrennbare Einheit mit dem Temperatursensor und dem nachgeschalteten Korrekturglied.

Da eine Temperaturmessung mit einem Thermoelement immer eine relative Temperaturmessung ist, muss die eine Seite des Thermoelements herkömmlicherweise auf eine sogenannte Vergleichstemperatur gebracht werden. Diese Vergleichstemperatur wird üblicherweise mit einem zusätzlichen Temperatursensor gemessen. Bei der Erfindung kann diese zusätzliche Messung entfallen, wenn der zum Einsatz kommende ASIC eine interne Temperaturmessung beinhaltet, die dann als Vergleichsstellentemperatur benutzt werden kann.

Das erfindungsgemäße Temperatur-Messsystem weist als Temperatursensor vorzugsweise ein Thermoelement auf, das bereits vorstehend erwähnt wurde und an sich bekannt ist. Die Erfindung lässt sich jedoch in gleicher Weise auch mit anderen Typen von Temperatursensoren realisieren, wie beispielsweise temperaturabhängigen Widerständen (z.B. PTCs, NTCs). Die Erfindung ist also nicht auf Temperatur-Messsysteme beschränkt, bei denen als Temperatursensor ein Thermoelement zum Einsatz kommt, sondern umfasst auch Temperatur-Messsysteme, bei denen als Temperatursensor ein temperaturabhängiger Widerstand verwendet wird.

Vorzugsweise ist zwischen dem Temperatursensor und dem Korrekturglied ein Analog/Digital-Wandler angeordnet, der die in analoger Form vorliegende Thermospannung und ggf. das Messsignal der Vergleichstemperatur in ein entsprechendes Digitalsignal umwandelt, das dann in dem digital arbeitenden Korrekturglied verarbeitet wird. Die digitale Verarbeitung des Temperaturmesssignals in dem Korrekturglied ermöglicht eine einfache Korrektur entsprechend der vorgegebenen Korrekturkennlinie.

In einer Variante der Erfindung mit einem digitalen Korrekturglied ist dem Korrekturglied ein Digital/Analog-Wandler nachgeschaltet, der das digitalisierte und korrigierte Temperaturmesssignal wieder in ein analoges Signal umwandelt, das dann in herkömmlicher Weise als Messsignal zur Verfügung steht. Beispielsweise kann das von dem Digital/Analog-Wandler erzeugte analoge Signal ein Stromsignal im Bereich von 0-20 mA oder 4-20 mA oder ein Spannungssignal im Bereich von 0-5 V oder 0-10 V ist.

In einer anderen Variante der Erfindung mit einem digitalen Korrekturglied ist dem Korrekturglied dagegen ein Bustreiber nachgeschaltet, der an einen digitalen Datenbus (z.B. USB, RS242, RS485, CAN, LIN, Profi-Bus, DIN-Bus, Ethernet) anschließbar ist und eine digitale Messsignalverarbeitung der ausgegebenen Temperatur oder der korrigierten Thermospannung ermöglicht.

Vorzugsweise ist die Korrekturkennlinie in dem Korrekturglied einstellbar, um eine Anpassung an die sensorspezifische Messkennlinie des jeweiligen Temperatursensors zu ermöglichen. Hierzu wird vorzugsweise werksseitig die tatsächliche Messkennlinie des Temperatursensors gemessen, woraus dann die Korrekturkennlinie errechnet werden kann, die zur Korrektur erforderlich ist, damit das korrigierte Temperaturmesssignal in einem vorgegebenen Toleranzfeld der Normkennlinie liegt. Die Einstellung der Korrekturlinie erfolgt also vorzugsweise herstellerseitig im Rahmen eines vorgeschalteten Kalibriervorgangs vor dem eigentlichen Messbetrieb.

Es ist jedoch auch möglich, dass die Korrekturkennlinie nach der Auslieferung während des Messbetriebs an eine alterungsbedingte Änderung der sensorspezifischen Messkennlinie angepasst wird. So unterliegen Thermoelemente der Alterung aufgrund von Oxidation, Diffusion, Verunreinigung und Änderungen in der Gitterstruktur. Derartige Alterungserscheinungen wirken sich auch auf die tatsächliche Messkennlinie aus, was im laufenden Messbetrieb durch eine entsprechende Anpassung der Korrekturkennlinie kompensiert werden kann. Darüber hinaus kann die Korrekturkennlinie auch unabhängig von sensorspezifischen oder alterungsbedingten Abweichungen geändert werden, um eine Anpassung an eine andere Normkennlinie zu erreichen.

Weiterhin ist zu erwähnen, dass die Korrekturkennlinie vorzugsweise individuell für jeden einzelnen Temperatursensor eingestellt wird und nicht für eine Vielzahl von Temperatursensoren eines bestimmten Sensortyps. Auf diese Weise können bei der Korrektur individuelle Bauteilstreuungen berücksichtigt werden.

Besonders vorteilhaft an der Erfindung ist die Möglichkeit, kostengünstige Materialien als Leiter des Thermoelements einzusetzen, wie beispielsweise Nickel oder wärmebeständigen Stahl.

Darüber hinaus ermöglicht die Erfindung ein kostengünstiges Herstellungsverfahren für das Thermoelement, bei dem die Bauteilstreuung der Messkennlinie des Temperatursensors größer sein kann als die Toleranz der vorgegebenen Normkennlinie.

Ferner ist zu erwähnen, dass vorzugsweise der Temperatursensor, der Analog/Digital-Wandler, das Korrekturglied, der Digital/Analog-Wandler und/oder der Bustreiber in einem gemeinsamen Gehäuse angeordnet sind und/oder eine untrennbare Einheit bilden.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: ein vereinfachtes Blockschaltbild eines erfindungsgemäßen Temperatur-Messsystems sowie
- Figur 2: ein Blockschaltbild eines alternativen Ausführungsbeispiels eines erfindungsgemäßen Temperatur-Messsystems.

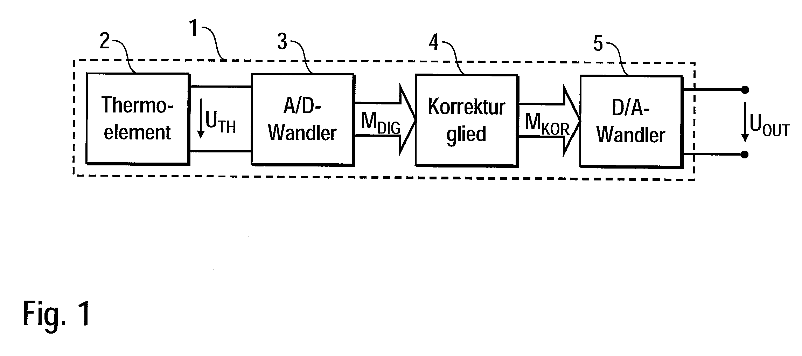

Das Blockschaltbild in Figur 1 zeigt ein erfindungsgemäßes Temperatur-Messsystems 1, das als Temperatursensor ein Thermoelement 2 aufweist, das zwei elektrische Leiter aus unterschiedlichen Materialien aufweist, die an zwei Verbindungsstellen zu einem Stromkreis verbunden sind. Eine der beiden Verbindungsstellen wird hierbei mit einem weiteren Temperatursensor gemessen, während die andere Verbindungsstelle der zu messenden Temperatur ausgesetzt wird, so dass das Thermoelement 2 aufgrund des bekannten Seebeck-Effekts eine Thermospannung U_{TH} erzeugt, die ein direktes Maß für die Temperaturdifferenz und damit für die zu messende Temperatur ist.

Die in analoger Form vorliegende Thermospannung U_{TH} wird anschließend einem Analog/Digital-Wandler 3 zugeführt, der ein digitalisiertes Spannungssignal M_{DIG} erzeugt, das die Thermospannung U_{TH} und damit auch die zu messende Temperaturdifferenz in digitaler Form wiedergibt.

Das digitalisierte Spannungssignal M_{DIG} wird dann einem Korrekturglied 4 zugeführt, das aus dem digitalisierten Spannungssignal M_{DIG} und der parallel gemessenen Vergleichsstellentemperatur entsprechend einer vorgegebenen Korrekturkennlinie ein korrigiertes Spannungssignal M_{KOR} erzeugt, das die gemessene Temperatur entsprechend dem gewählten Thermoelementtyp und entsprechend der gewählten technischen Norm (z.B. IEC 60584) wiedergibt.

Schließlich wird das korrigierte Spannungssignal M_{KOR} einem Digital/Analog-Wandler 5 zugeführt, der ein herkömmliches analoges Spannungssignal U_{OUT} erzeugt, das in der üblichen Weise wie bei den herkömmlichen Thermoelementen ausgewertet werden kann. Alternativ besteht die Möglichkeit, dass der Digital/Analog-Wandler 5 ein analoges Stromsignal erzeugt, das die gemessene Temperaturdifferenz wiedergibt.

Das Korrekturglied 4 arbeitet hierbei digital und korrigiert das digitalisierte Spannungssignal M_{DIG} entsprechend einer vorgegebenen Korrekturkennlinie, die zuvor in einem vorangegangenen Kalibrierungsvorgang ermittelt wurde. Hierzu wird zunächst die tatsächliche Messkennlinie des Thermoelements 2 ausgemessen, wobei die Messkennlinie erhebliche sensorspezifische Streuungen aufweisen kann, ohne die Genauigkeit der Temperaturmessung zu beeinträchtigen. Aus der auf diese Weise ermittelten tatsächlichen Messkennlinie wird die Korrekturkennlinie dann so ermittelt, dass eine Verknüpfung der tatsächlichen Messkennlinie mit der Korrekturkennlinie zu der gewählten Normkennlinie entsprechend der gewählten technischen Norm (z.B. IEC 60584) führt. Aufgrund der Korrektur durch das Korrekturglied 4 muss das Thermoelement 2 nur sehr grobe Toleranzen einhalten bzw. kann ein komplett anderes thermoelektrisches Verhalten zeigen, was eine kostengünstige Herstellung ermöglicht.

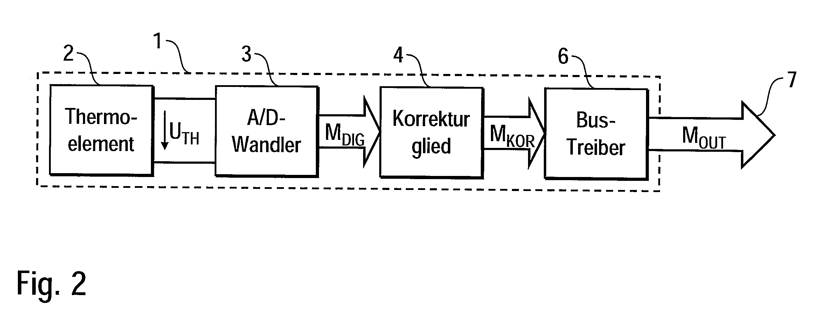

Das in Figur 2 dargestellte alternative Ausführungsbeispiel stimmt weitgehend mit dem vorstehend beschriebenen und in Figur 1 gezeigten Ausführungsbeispiel überein, so dass zur Vermeidung von Wiederholungen auf die vorstehende Beschreibung zu Figur 1 verwiesen wird, wobei für entsprechende Bauteile dieselben Bezugszeichen verwendet werden.

Eine Besonderheit dieses Ausführungsbeispiels besteht darin, dass dem Korrekturglied 4 kein Digital/Analog-Wandler 5, sondern ein Bustreiber 6 nachgeschaltet ist, der an einen hier nur schematisch dargestellten Datenbus 7 angeschlossen werden kann und eine digitale Weiterverarbeitung des Temperaturmesssignals M_{OUT} ermöglicht. Bei dem ausgangsseitig abgegebenen Signal kann es sich jedoch auch - wie bereits vorstehend erwähnt - um ein Strom- oder Spannungssignal handeln, das die gemessene Temperaturdifferenz wiedergibt.

Die Erfindung ist nicht auf die beiden vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

## Patentansprüche

1. Temperatur-Messsystem (1), mit
- einem Temperatursensor (2), der in Abhängigkeit von einer zu messenden Temperatur entsprechend einer sensorspezifischen Messkennlinie ein Temperaturmesssignal (U_{TH}) erzeugt,
**gekennzeichnet durch**
- ein Korrekturglied (4), das dem Temperatursensor (2) nachgeschaltet ist und aus dem Temperaturmesssignal (U_{TH}) entsprechend einer Korrekturkennlinie ein korrigiertes Temperaturmesssignal (M_{KOR}) bestimmt, das in einem Toleranzfeld einer vorgegebenen Normkennlinie liegt.

2. Temperatur-Messsystem (1) nach Anspruch 1, **dadurch gekennzeichnet, dass** der Temperatursensor (2) ein Thermoelement ist, das eine temperaturabhängige Thermospannung (U_{TH}) erzeugt.

3. Temperatur-Messsystem (1) nach Anspruche 1 oder 2, **gekennzeichnet durch** einen Analog/Digital-Wandler (3) zwischen dem Temperatursensor (2) und dem Korrekturglied (4), wobei das Korrekturglied (4) digital arbeitet.

4. Temperatur-Messsystem (1) nach Anspruch 3, **gekennzeichnet durch** einen Digital/Analog-Wandler (5), der dem digitalen Korrekturglied (4) nachgeschaltet ist.

5. Temperatur-Messsystem (1) nach Anspruch 3, **gekennzeichnet durch** einen Bustreiber (6), der dem digitalen Korrekturglied (4) nachgeschaltet und an einen digitalen Datenbus (7) anschließbar ist.

6. Temperatur-Messsystem (1) nach einem der vorhergehenden Ansprüche, **dadurch gekennzeichnet, dass** die Korrekturkennlinie einstellbar ist.

7. Temperatur-Messsystem (1) nach einem der vorhergehenden Ansprüche, **dadurch gekennzeichnet, dass** der Temperatursensor (2), der Analog/Digital-Wandler (3), das Korrekturglied (4), der Digital/Analog-Wandler (5) und/oder der Bustreiber (6) in einem gemeinsamen Gehäuse angeordnet sind und/oder eine untrennbare Einheit bilden.

8. Temperatur-Messsystem (1) nach einem der vorhergehenden Ansprüche, **dadurch gekennzeichnet, dass** die Bauteilstreuung der Messkennlinie des Temperatursensors (2) größer ist als die Toleranz der vorgegebenen Normkennlinie.

9. Temperatur-Messsystem (1) nach einem der vorhergehenden Ansprüche, **dadurch gekennzeichnet, dass** das Thermoelement (2) Leiter aufweist, die aus nicht genormten Thermomaterialien bestehen.

10. Temperaturmessverfahren mit den folgenden Schritten:
- Erzeugung eines Temperaturmesssignals (U_{TH}) in Abhängigkeit von einer zu messenden Temperatur entsprechend einer sensorspezifischen Messkennlinie,
**gekennzeichnet durch** folgenden Schritt:
- Korrektur des Temperaturmesssignals (U_{TH}) entsprechend einer vorgegebenen Korrekturkennlinie, so dass das korrigierte Temperaturmesssignal (M_{KOR}) in einem zulässigen Toleranzfeld einer vorgegebenen Normkennlinie liegt.

11. Temperaturmessverfahren nach Anspruch 10, **dadurch gekennzeichnet, dass** das Temperaturmesssignal (U_{TH}) von einem Thermoelement (2) gemessen wird.

12. Temperaturmessverfahren nach Anspruch 10 oder 11, **dadurch gekennzeichnet, dass** das Temperaturmesssignal (U_{TH}) vor der Korrektur digitalisiert und anschließend digital korrigiert wird.

13. Temperaturmessverfahren nach Anspruch 12, **dadurch gekennzeichnet, dass** das korrigierte und digitalisierte Temperaturmesssignal (M_{KOR}) nach der Korrektur in ein analoges Signal (U_{OUT}) umgewandelt wird.

14. Temperaturmessverfahren nach Anspruch 12, **dadurch gekennzeichnet, dass** das korrigierte und digitalisierte Temperaturmesssignal (M_{KOR}) einem Datenbus (7) zugeführt wird.

15. Temperaturmessverfahren nach einem der Ansprüche 10 bis 14, **dadurch gekennzeichnet, dass** die Korrekturkennlinie vor dem eigentlichen Messbetrieb werksseitig eingestellt wird.

16. Temperaturmessverfahren nach einem der Ansprüche 10 bis 15, **dadurch gekennzeichnet, dass** die Korrekturkennlinie während des Messbetriebs oder bei Unterbrechungen des Messbetriebs an eine alterungsbedingte Änderung der sensorspezifischen Messkennlinie angepasst wird.

17. Temperaturmessverfahren nach einem der Ansprüche 10 bis 16, **dadurch gekennzeichnet, dass** die Korrekturkennlinie zur Anpassung an eine andere Normkennlinie geändert wird.

18. Temperaturmessverfahren nach einem der Ansprüche 10 bis 17, **dadurch gekennzeichnet, dass** die Korrekturkennlinie zur Anpassung an die Anforderungen des Anwenders auch nachträglich an jede beliebige Normkennlinie angepasst werden kann.

19. Temperaturmessverfahren nach einem der Ansprüche 10 bis 18, **dadurch gekennzeichnet, dass** die Bauteilstreuung der Messkennlinie größer ist als die Toleranz der vorgegebenen Normkennlinie.

20. Temperaturmessverfahren nach einem der Ansprüche 10 bis 19, **dadurch gekennzeichnet, dass** zusätzlich eine Vergleichsstellentemperatur gemessen und bei der Erzeugung des Temperaturmesssignals berücksichtigt wird.
